# DEMANDE DE BREVET EUROPEEN

(11) **EP 1 612 678 A1**
(43) Date de publication de la demande: **04.01.2006**
(21) Numéro de dépôt: 05106013.5
(22) Date de dépôt: 01.07.2005
(51) Int. Cl.: G06F 11/34, H04L 12/24, H04B 7/185

(54) **Simulation de réseau ATN pour le test d'applications d'équipements terminaux dans l'aéronautique civile.**

(30) Priorité: 02.07.2004 FR 0407385
(71) Demandeur: Thales, 92200 Neuilly Sur Seine (FR)
(72) Inventeur: Paletou, Christophe, 94117, Arceuil Cedex (FR)
(74) Mandataire: Lucas, Laurent Jacques

(57) **Abrégé**

La présente invention permet de simuler un réseau ATN, et ce pour tester des applications (31, 32, 33) d'équipements terminaux. Selon l'invention, on réalise la simulation au moyen d'une machine de test (30) destinée à se connecter à un réseau IP (40).

Selon un mode de réalisation préféré, la machine de test comporte un pilote (38) formant une interface entre une couche réseau (37) et une interface Socket BSD (39).

En émission, le pilote encapsule des données provenant des couches protocolaires hautes (35, 36, 37), répondant aux spécifications ATN, dans des datagramme UDP, pour être acheminées par l'intermédiaire du réseau IP (40).

En réception, le pilote désencapsule les données pour une émission vers les couches protocolaires hautes.

## Description

La présente invention se rapporte au réseau de télécommunications aéronautique ATN (acronyme de l'expression anglo-saxonne "Aeronautical Telecommunication Network"). Le réseau ATN est destiné à relier entre eux les sous-réseaux des différents acteurs de l'aéronautique (services du contrôle aérien, compagnies aériennes, avions civils ou privés, services météo, services aéroportuaires, etc.) pour échanger des données (ordre de contrôle, messages météo, paramètres de vol, reports de position, communications passagers, etc.) de façon fiable et sécurisée.

Les formats des messages et des protocoles de télécommunications sont normalisés par l'Organisation de l'Aviation Civile Internationale (OACI ou IACO en langue anglo-saxonne). Ces formats reposent sur le modèle d'architecture de réseau OSI (acronyme de l'expression anglo-saxonne "Open System Interconnection"). Le modèle OSI est celui de l'ISO (Organisation Internationale de Normalisation).

Le réseau ATN n'est pas encore développé à ce jour. Toutefois, les systèmes et logiciels de gestion de trafic aérien en cours de développement devront répondre aux exigences des normes de l'ATN. Les industriels doivent par conséquent prévoir de qualifier leurs nouveaux systèmes. Cette qualification ne peut être réalisée sur les équipements existant, d'une part parce que l'infrastructure ATN n'est pas encore développée à ce jour, et d'autre part pour des raisons de sécurité évidentes.

II faut par conséquent développer des systèmes pour tester les nouveaux équipements et logiciels. A cet effet, un système de test doit permettre de simuler les interfaces du réseau ATN auxquelles accèdent l'équipement ou le logiciel à tester.

L'invention a pour objet un procédé de simulation d'un réseau ATN destiné au test d'une application d'un équipement terminal dudit réseau. Ce procédé comporte les étapes suivantes :
(a) on lit les données d'une table d'adressage, ladite table d'adressage étant mémorisée dans un fichier de configuration, la table d'adressage associant d'une part des adresses ATN d'applications d'équipements terminaux, une adresse ATN comprenant une appellation d'entité réseau (NET) et un point d'accès au service de la couche réseau (NSAP), et d'autre part une un identificateur de service UDP, un identificateur de service UDP comprenant une adresse IP et un numéro de port UDP ;
(b) lorsqu'on reçoit une unité de donnée de protocole de la couche transport (T-PDU) provenant de l'application à tester, ladite unité de donnée de protocole de la couche transport comprenant une adresse ATN de destination, on forme puis on émet un datagramme UDP, le datagramme UDP encapsulant ladite unité de donnée de protocole de la couche transport, le datagramme UDP comprenant en outre l'identificateur de service UDP associé de façon bi-univoque à l'adresse ATN de destination ;
(c) lorsqu'on reçoit un datagramme UDP, ledit datagramme UDP comprenant une unité de donnée de protocole de la couche transport (T-PDU) encapsulée et un indentificateur de service UDP associé de façon bi-univoque une adresse ATN de destination, l'adresse ATN de destination étant celle de l'application à tester, on désencapsule l'unité de donnée de protocole (T-PDU) et on l'émet vers l'application à tester.

L'invention a aussi pour objet un procédé pour préparer la mise en oeuvre d'un procédé ci-dessus, dans lequel :
(a) on détermine des adresses ATN d'applications d'équipements terminaux, une adresse ATN comprenant une appellation d'entité réseau (NET) et un point d'accès au service de la couche réseau (NSAP) ;
(b) on associe de façon bi-univoque à chaque adresse ATN un identificateur de service UDP, un identificateur de service UDP comprenant une adresse IP et un numéro de port UDP ;
(c) on code à un format déterminé les données d'une table d'adressage, la table d'adressage comprenant une pluralité d'entrées, chaque entrée de la table permettant de déterminer l'identificateur de service UDP associé à une adresse IP et réciproquement ;
(d) on écrit ou on ajoute les données de la table d'adressage à un fichier de configuration.

L'invention présente l'avantage d'éviter l'élaboration d'information de routage propre au réseau ATN. Elle permet en outre d'utiliser une machine de test unique, sur laquelle peuvent être simulées plusieurs entités d'un réseau ATN virtuel.

Selon un mode de réalisation avantageux, le procédé est mis en oeuvre par un logiciel programmé avec l'environnement STREAMS du langage de programmation C, ce logiciel étant destiné à être exécuté sur une plateforme du type UNIX.

D'autres caractéristiques et avantages de l'invention apparaîtront à la lecture de la description détaillée suivante présentée à titre d'illustration non limitative et faite en référence aux figures annexées, lesquelles représentent :
- la figure 1, un exemple de réseau ATN,
- la figure 2, une communication entre deux équipements terminaux sous la forme d'une représentation selon le modèle OSI,
- la figure 3, un module STREAMS,
- la figure 4, un exemple de machine de test mettant en oeuvre un procédé selon l'invention,
- la figure 5, des messages STREAMS.

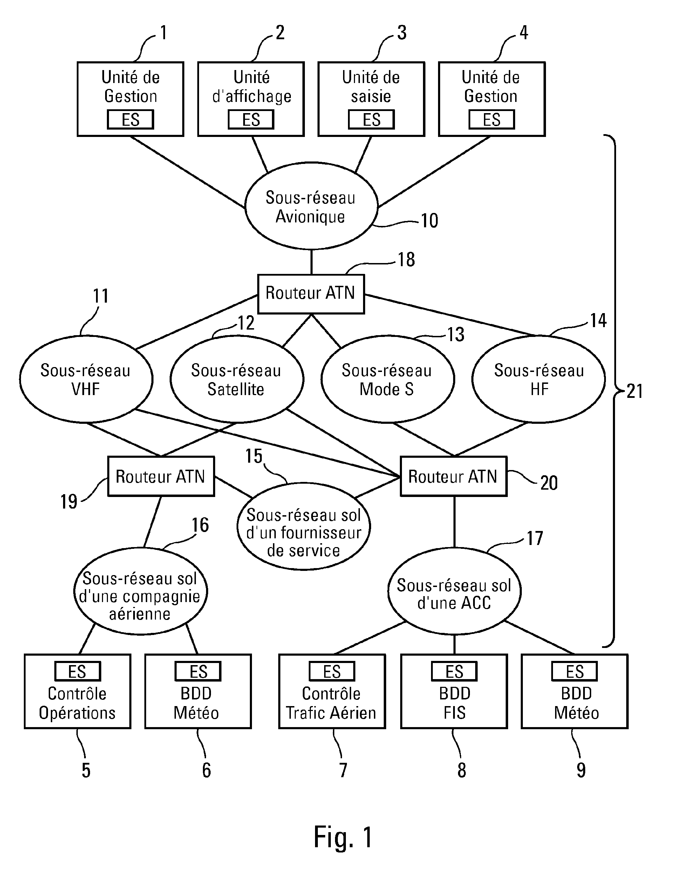

On se réfère maintenant à la figure 1. Un réseau ATN permet de faire communiquer entre eux des équipements terminaux d'une compagnie aérienne, d'un fournisseur de service de contrôle aérien (AAC), et d'un avion.

Les principaux éléments intervenant dans l'infrastructure d'un réseau ATN sont les sous-réseaux, les routeurs ATN (appelés encore systèmes intermédaires) et les équipements terminaux.

Les sous-réseaux, référencés 10 à 17, font partie intégrante du réseau de communication, mais ne sont pas en eux-mêmes des équipements ATN. Un sous-réseau est un réseau de communication indépendant, basé sur une technologie particulière (par exemple X.25 "Packet-Switched Network") utilisé comme moyen pour transférer des informations entre des équipements ATN. Une multitude de sous-réseaux sol-sol ou air-sol permettent d'obtenir de multiples chemins de données entre les équipements terminaux.

Les routeurs ATN, référencés 18 à 20 sur la figure, ont pour fonction d'interconnecter des types variés de sous-réseaux entre eux. Ils acheminent les paquets de données à travers ces sous réseaux selon la classe de service demandée et selon la disponibilité du moment de l'infrastructure réseau.

Les équipements terminaux ATN, référencés 1 à 9, fournissent des services d'applications et des couches hautes de protocole (modèle OSI) permettant une communication pair à pair.

Dans l'exemple représenté sur la figure 1, des équipements terminaux 1, 2, 3, 4 sont placés dans un avion. Ils comprennent des unités de gestion 1 et 4, une unité d'affichage 2, une unité de saisie 3. Ces différents équipements sont reliés par un sous-réseau avionique 10, c'est à dire embarqué dans l'avion. Le sous-réseau avionique 10 est apte à communiquer avec un routeur ATN 18. Le routeur ATN 18 est embarqué. Le routeur ATN 18 peut échanger des données avec d'autres routeurs ATN 19, 20 par l'intermédiaire de sous-réseaux de communication 11, 12, 13, 14.

Le routeur ATN 19 est par ailleurs apte à communiquer par l'intermédiaire d'un sous-réseau sol 16 d'une compagnie aérienne avec des équipements terminaux de cette compagnie aérienne. Ces équipements terminaux comprennent une base de données de contrôle des opérations 5 et une base de données météo 6.

Le routeur ATN 20 est quant à lui apte à communiquer par l'intermédiaire d'un sous-réseau sol 17 d'un fournisseur de service de contrôle aérien (AAC, ou CAA dans la littérature anglo-saxonne) avec des équipements terminaux de ce fournisseur de service. Ces équipements terminaux comprennent un centre de contrôle de trafic aérien 7, une base de données d'information de vol (FIS pour "flight information system") 8, et une base de données météo 9.

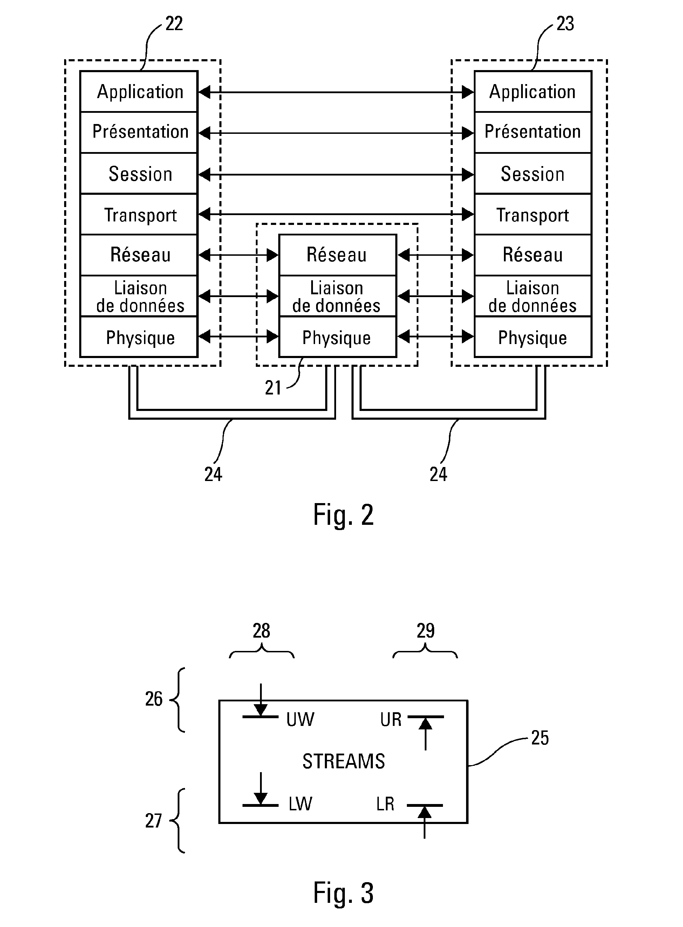

On se réfère maintenant à la figure 2. La communication pair à pair entre équipements terminaux, à travers le réseau ATN, suppose la présence d'équipements intermédiaires 21 (voir aussi figure 1). Cette communication est représentée sous forme schématique à la figure 2, cette représentation utilisant le formalisme du modèle OSI à 7 couches.

Deux équipements terminaux 22 et 23 communiquent à travers le réseau ATN. Chacun est relié à un équipement intermédiaire par l'intermédiaire d'un canal de communication physique (ondes radio, liaison par fibre optique, câble coaxial...) 24. Les équipements intermédiaires 21 permettent d'acheminer les données d'un équipement terminal à l'autre. Dans les équipements intermédiaires, les couches de communications participant à l'acheminement des données sont les couches basses (réseau, liaison de données, physique) du modèle OSI. En revanche, la communication pair à pair fait intervenir toutes les couches du modèle OSI.

On décrit maintenant un exemple de réalisation d'un programme apte à mettre en oeuvre le procédé décrit. Le programme est un pilote (ou driver dans la littérature anglo-saxonne) écrit de préférence en langage de programmation C. Le pilote utilise de préférence les mécanismes "STREAMS" du système d'exploitation Unix.

Afin d'utiliser les mécanises STREAMS, on utilise l'interface de programmation du même nom, disponible sous Unix. Cette interface de programmation est décrite en détail dans l'ouvrage de référence intitulé "Programmer's Guide STREAMS", édité par Unix System V, version 4.2 (ISBN: 0-13-020660-1).

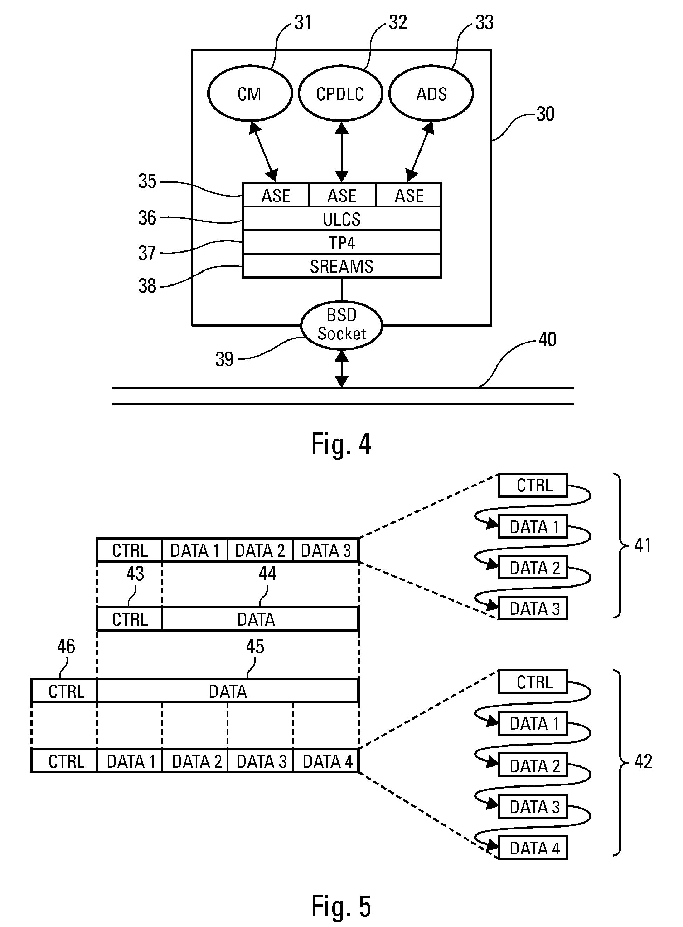

On se réfère maintenant aux figures 3 et 4. Le pilote est destiné à être placé dans une machine de test 30. Les applications à tester sont aussi placées sur cette machine de test. Par exemple, on peut tester une application de gestion de contexte 31, une application pour le dialogue direct entre un contrôleur et un pilote d'avion 32, ou une application de surveillance dépendante automatique 33. Ces applications sont désignées respectivement de façon conventionnelle par les acronymes CM, CPDLC et ADS, issus des expressions anglo-saxonnes "Context Management", "Controler-Pilot Data Link Communication" et "Automatic Dependant Surveillance".

La machine de test comporte en outre les applications mettant en oeuvre les couches protocolaires hautes, c'est à dire de la couche transport à la couche application dans le modèle OSI. Ces applications sont celles destinées à être placées dans les équipements terminaux du réseau ATN.

Les applications mettant en oeuvre les couches protocolaires hautes sont des éléments de service d'application 35, les services de communication des couches hautes 36, et un service de transport classe 4, 37.

Les éléments de service d'application sont désignés de façon conventionnelle par l'acronyme ASE pour "Application Service Element". Ces applications sont spécifique sol ou air. Elles permettent de mettre en oeuvre la partie supérieure de la couche protocolaire application dans le modèle OSI.

Les services de communication des couches hautes sont désignés de façon conventionnelle par l'acronyme ULCS pour "Upper-Layer Communication Services". Quant à la couche de transport, il s'agit d'une couche mettant en oeuvre le protocole TP4.

Le pilote présente deux interfaces : une interface haute 26 et une interface basse 27. L'interface haute du pilote est une interface entre les couches transport 37 et réseau. Cette interface suit le standard NPI (acronyme de "Network Protocol Interface") en mode non connecté. L'homme du métier pourra consulter le document ayant pour titre "Network Provider Interface Specification", de Unix International, OSI Work Group, publié le 17 août 1992 sous le numéro de révision 2.0.0. Ce document décrit l'interface entre les couches transport et réseau pour l'interface de programmation STREAMS.

L'interface basse est une interface socket BSD 39. En d'autres termes, l'interface basse suit le standard d'interface socket BSD (acronyme de "Berckley Software Distribution") en mode non connecté, c'est à dire utilisant le protocole UDP (acronyme de User Datagram Protocol). L'interface socket BSD est encore connue sous le nom de XPG4-UNIX.

L'interface de programmation STREAMS 38 permet de traiter des queues, c'est à dire des structures contenant des messages. Chaque interface (haute et basse) dispose d'une queue pour l'écriture (messages à émettre) et d'une autre pour la lecture (messages reçus et à traiter). Ces queues sont désignées par la suite par les références UW, UR, LW et LR. Dans ces références, la lettre U représente l'interface haute, la lettre L représente l'interface basse, la lettre W représente la queue d'écriture et la lettre R celle de lecture.

Les queues LW et UR ne sont pas utilisées par le pilote. En effet, ces queues ne servent qu'en cas de congestion. Elles ne sont donc pas utiles dans les protocoles de type datagramme, dans lesquels la perte de données est autorisée.

Pour chaque queue, on dispose deux procédures. La première procédure permet de positionner un message dans la queue. Cette procédure est désignée par l'expression anglo-saxonne "put procedure". La seconde procédure permet de traiter un message non urgent issu de la queue. Cette seconde procédure est désignée par l'expression anglo-saxonne "service procedure".

On décrit maintenant une implémentation possible de la procédure de service associée à la queue UW, désignée par l'expression anglo-saxonne "UW service procedure".

Cette procédure vise à traiter un message reçu (terminologie STREAMS), appelé encore primitive en référence au modèle OSI. Afin de se conformer au standard NPI en mode non connecté, on retourne un message N_BIND_ACK si le message reçu de la couche supérieure est N_BIND_REQ, et on retourne un message N_UNBIND_ACK si le message reçu de la couche supérieure est N_UNBIND_REQ.

Si le message reçu est une requête de données unitaires venant de la couche transport, ce message étant désigné de façon conventionnelle par le symbole N_UNITDATA_REQ, on encapsule les données de la couche transport dans un datagramme UDP.

On se réfère maintenant à la figure 5 sur laquelle est représenté un message N_UNITDATA_REQ. Dans ce mode de réalisation, le message 14 est un message STREAMS. II comporte à ce titre un champ de contrôle 43 d'une part, et un champ de données 44 d'autre part. Le champ de contrôle est désigné de façon conventionnelle par le symbole CTRL, et celui de données par le symbole DATA.

Le message 14 est par ailleurs une unité de donnée de protocole (T-PDU) provenant de la couche transport 37 (voir la figure 4). Cette unité de donnée de protocole provient de l'une des applications à tester 31, 32, 33. L'unité de donnée de protocole contient l'adresse ATN de destination, c'est à dire l'adresse ATN de l'équipement terminal destinataire.

L'adresse ATN de destination est comprise dans le champ de contrôle 43 du message 41. On détermine à partir de cette adresse ATN l'identificateur de service UDP associé de façon bi-univoque à l'adresse ATN de destination.

On forme un datagramme UDP, le datagramme UDP encapsulant ladite unité de donnée de protocole de la couche transport. Le datagramme UDP est aussi un message STREAMS. Ce message 42 a la même structure que le message reçu 41, en ce sens qu'il comporte un champ de contrôle 46 et un champ de données 45. L'encapsulation consiste à placer les champs de contrôle et de données du message reçu dans le champ de données 45 du datagramme UDP.

Le datagramme UDP comprend l'identificateur de service UDP déterminé à partir de l'adresse ATN de destination. L'identificateur de service, c'est à dire l'adresse IP et le numéro de port UDP, est placé dans le champ de contrôle 46 du datagramme.

Une fois formé, le datagramme UDP est émis. Cette émission est réalisée par un appel "Sendmsg()" de l'interface socket BSD. Cette interface socket est représentée sous la référence 39 sur la figure 4.

On a ainsi décrit le procédé mis en oeuvre lors de l'émission de données par l'application à tester. On décrit maintenant le procédé mis en oeuvre lors de la réception de données par l'application à tester.

La réception peut être mise en oeuvre par un procédé inverse (désencapsulation), en implémentant la procédure de service associée à la queue LR, désignée par l'expression anglo-saxonne "LR service procedure".

Selon un autre mode de réalisation, on utilise une procédure de scrutation (ou "polling" dans la littérature anglo-saxonne) du port UDP local (socket) qui est ouverte lors de l'initialisation du module STREAMS. Cette procédure de scrutation remplace l'implémentation de la procédure de service de la queue LR.

La procédure de scrutation lit le socket UDP local. On utilise à cet effet l'instruction "Recvmsg()" qui permet d'obtenir un descripteur de fichier.

Si un message est présent, ce message provient de l'interface socket BSD. Ce message est alors un datagramme UDP construit en encapsulant des données émises par un autre équipement terminal ATN.

Le datagramme UDP comprend une unité de donnée de protocole de la couche transport (T-PDU) encapsulée, c'est à dire placée dans le champ de données du message. Le champ de contrôle du message comporte quant à lui à un identificateur de service UDP. Cet identificateur de service est associé de façon bi-univoque à une adresse ATN de destination. Si l'adresse ATN associée est celle de l'application (ou d'une des applications) à tester on désencapsule l'unité de donnée de protocole (T-PDU) et on l'émet vers l'application à tester.

Afin de réaliser cette émission, la procédure de scrutation utilise un appel "PutNext()", qui réalise un appel "Put()" sur la queue LR du module sus-jacent, le module STREAMS du pilote en l'occurrence. Le paramètre de la procédure "PutNext()" est le message desencapsulé. Ce message est un message de type N_UNITDATA_IND.

On décrit maintenant un exemple d'implémentation d'une procédure d'initialisation du pilote. Cette procédure d'initialisation est exécutée en début de simulation. Le programme de simulation peut être appelé avec une ligne de commande Unix, prenant comme premier argument une adresse ATN de la machine de test (N-SAP) et comme second argument le numéro de port UDP local de la machine de test.

La procédure d'initialisation fait un appel pour ouvrir un socket BSD, avec la commande "Socket()" en language C. L'appel pour ouvrir un socket BSD renvoie un entier, correspondant à un descripteur de fichier.

Ensuite, la procédure d'initialisation spécifie le descripteur de fichier avec la commande "Bind()" en language C.

Ces deux appels peuvent se traduire par les lignes de code suivantes:
fd = Socket( AF_INET, SOCK_DGRAM )
Bind( fd, port )
dans lesquelles:
- fd: représente le descripteur de fichier,
- AF_INET: représente le domaine Internet,
- SOCK_DGRAM: représente le protocole datagramme (UDP),
- port: représente le numéro de port fournit.

## Revendications

1. Procédé de simulation d'un réseau ATN destiné au test d'une application d'un équipement terminal dudit réseau, dans lequel :
a) on lit les données d'une table d'adressage, ladite table d'adressage étant mémorisée dans un fichier de configuration, la table d'adressage associant d'une part des adresses ATN d'applications d'équipements terminaux, une adresse ATN comprenant une appellation d'entité réseau (NET) et un point d'accès au service de la couche réseau (NSAP), et d'autre part une un identificateur de service UDP, un identificateur de service UDP comprenant une adresse IP et un numéro de port UDP ;
b) lorsqu'on reçoit une unité de donnée de protocole de la couche transport (T-PDU) provenant de l'application à tester, ladite unité de donnée de protocole de la couche transport comprenant une adresse ATN de destination, on forme puis on émet un datagramme UDP, le datagramme UDP encapsulant ladite unité de donnée de protocole de la couche transport, le datagramme UDP comprenant en outre l'identificateur de service UDP associé de façon bi-univoque à l'adresse ATN de destination;
c) lorsqu'on reçoit un datagramme UDP, ledit datagramme UDP comprenant une unité de donnée de protocole de la couche transport (T-PDU) encapsulée et un indentificateur de service UDP associé de façon bi-univoque une adresse ATN de destination, l'adresse ATN de destination étant celle de l'application à tester, on désencapsule l'unité de donnée de protocole (T-PDU) et on l'émet vers l'application à tester.

2. Procédé pour préparer la mise en oeuvre d'un procédé de simulation selon la revendication 1, dans lequel :
a) on détermine des adresses ATN d'applications d'équipements terminaux, une adresse ATN comprenant une appellation d'entité réseau (NET) et un point d'accès au service de la couche réseau (NSAP) ;
b) on associe de façon bi-univoque à chaque adresse ATN un identificateur de service UDP, un identificateur de service UDP comprenant une adresse IP et un numéro de port UDP ;
c) on code à un format déterminé les données d'une table d'adressage, la table d'adressage comprenant une pluralité d'entrées, chaque entrée de la table permettant de déterminer l'identificateur de service UDP associé à une adresse IP et réciproquement ;
d) on écrit ou on ajoute les données de la table d'adressage à un fichier de configuration.
